# EUROPÄISCHE PATENTANMELDUNG

(11) **EP 1 679 777 A1**
(43) Veröffentlichungstag der Anmeldung: **12.07.2006**
(21) Anmeldenummer: 05113050.8
(22) Anmeldetag: 29.12.2005
(51) Int. Cl.: H02H 7/093

(54) **Vorrichtung zur Defekterkennung bei einem Kollektor-Gleichstrommotor basierend auf der Welligkeit des Ankerstroms**

(30) Priorität: 05.01.2005 DE 102005000751
(71) Anmelder: Behr-Hella Thermocontrol GmbH, 70190 Stuttgart (DE)
(72) Erfinder: Knittel, Otto, 59494, Soest (DE)
(74) Vertreter: von Kreisler Selting Werner

(57) **Zusammenfassung**

Die Vorrichtung zur Defekterkennung bei einem einen Kommutator aufweisenden Gleichstrommotor, insbesondere für ein Kfz-Gebläse, ist mit einem Ankerstromspitzendetektor (26) zur Erkennung von infolge der Kommutierung hervorgerufenen Stromspitzen des Ankerstromsignals und einer Vergleichereinheit (30) zum Verglichen der Anzahl von detektierten Stromspitzen pro Zeiteinheit mit der auf Grund der aktuellen Betriebsspannung und Belastungen sowie des Kommutators des Gleichstrommotors (14) zu erwartenden Anzahl von Stromspitzen pro Zeiteinheit versehen. Ferner ist eine Defekterkennungseinheit (32) vorgehen, die ein Defektsignal ausgibt, wenn die Anzahl von detektierten Stromspitzen um mehr als ein vorgebbares Maß von der erwartenden Anzahl von Stromspitzen abweicht.

## Beschreibung

Die Erfindung betrifft eine Vorrichtung zur Defekterkennung bei einem einen Kommutator aufweisenden Gleichstrommotor, bei dem es sich insbesondere um den Motor eines Kfz-Gebläses handelt.

Gleichstrommotoren werden in einer Vielzahl von Anwendungen eingesetzt. Je nach Bedarf ist es erforderlich, den Gleichstrommotor auf das Vorliegen eines Defekts hin zu überwachen. Auf diese Weise kann beispielsweise erkannt werden, ob der Gleichstrommotor einen Lagerschaden oder andere Beschädigungen aufweist. Auch ist es mit einer derartigen Defekterkennung möglich, Beeinträchtigungen des Gleichstrommotors auf Grund von extremen Umgebungsbedingungen (beispielsweise Vereisungen) festzustellen.

Die Defekterkennung von Elektromotoren anhand der Ermittlung der elektrischen Betriebsgrößen wie Strom, Spannung und Widerstand ist grundsätzlich bekannt. Als Bespiel sei hier auf WO97/37416 A1 verwiesen.

Bei kommutierten Gleichstrommotoren in ihrer Anwendung als Stellantriebe ist es bekannt, den Verstellweg des vom Stellantrieb angetriebenen Elements anhand der Anzahl von Stromspitzen des Ankerstromsignals zu ermitteln, die in folge der Kommutierung auftreten. Durch Zählen dieser Stromspitzen kann auf die Lage bzw. die Anzahl von Umdrehungen des Ankers des Gleichstrommotors geschlossen werden. Daraus wiederum kann der Verstellweg des angetriebenen Elements (beispielsweise Fensterscheibe, Sitz o.dgl.) ermittelt werden. Die Detektion der Ankerstromsignal-Stromspitzen ist im Stand der Technik auch als "Ripple Counting" bekannt. Beispiele hierfür finden sich in EP 0 424 831 B1, DE 44 28 443 A1, DE 101 24 614 A1 und DE 101 26 169 A1.

Eine Aufgabe der Erfindung ist es, auf einfache Art und Weise eine Defekterkennung bei einem kommutierten Gleichstrommotor zu ermöglichen.

Zur Lösung dieser Aufgabe wird mit der Erfindung eine Vorrichtung zur Defekterkennung bei einem einen Kommutator aufweisenden Gleichstrommotor vorgeschlagen, bei dem es sich insbesondere um den Motor eines Kfz-Gebläses handelt, wobei die Vorrichtung versehen ist mit
- einem Ankerstromspitzendetektor zur Erkennung von infolge der Kommutierung hervorgerufenen Stromspitzen des Ankerstromsignals,
- einer Vergleichereinheit zum Vergleichen der Anzahl von detektierten Stromspitzen pro Zeiteinheit mit der auf Grund der aktuellen Betriebsspannung und Belastungen sowie des Kommutators des Gleichstrommotors zu erwartenden Anzahl von Stromspitzen pro Zeiteinheit und
- einer Defekterkennungseinheit, die ein Defektsignal ausgibt, wenn die Anzahl von detektierten Stromspitzen um mehr als ein vorgebbares Maß von der erwartenden Anzahl von Stromspitzen abweicht.

Nach der Erfindung werden mittels eines Detektors die infolge der Kommutierung hervorgerufenen Stromspitzen des Ankerstromsignals erkannt. Die pro Zeiteinheit erkannten Stromspitzen werden mit einem Wert verglichen, der die auf Grund der aktuellen Betriebsspannung und Belastung sowie des Aufbaus des Kommutators des Gleichstrommotors zu erwartenden Anzahl von Stromspitzen repräsentiert. Weicht dieser Wert von dem vom Ankerstromspitzendetektor gelieferten Wert für die Anzahl von detektierten Stromspitzen pro Zeiteinheit um mehr als ein vorgebbares Maß ab, wird in einer Defekterkennungseinheit ein Defektsignal erzeugt und ausgegeben.

Erfindungsgemäß wird also mit Hilfe eines Ripple-Count-Verfahrens ein kommutierter Gleichstrommotor auf Drehzahlabweichungen bis hin zum Stillstand überwacht. Der Stillstand kann beispielsweise hervorgerufen sein durch Lagerschäden oder elektrische Schäden. Um normale Stillstandsfälle des Gleichstrommotors von einem Stillstand infolge einer unbeabsichtigten Blockade des Gleichstrommotors unterscheiden zu können, werden erfindungsgemäß die Betriebsspannung oder andere aktuelle Betriebsparameter bzw. konstruktive Parameter des Gleichstrommotors abgefragt. Hieraus kann die zu erwartende Anzahl von Stromspitzen pro Zeiteinheit ermittelt werden. Weicht die detektierte Anzahl von Stromspitzen pro Zeiteinheit um mehr als ein vorgebbares Maß von der zu erwartenden Anzahl von Stromspitzen pro Zeiteinheit ab, wird auf Defekt erkannt und dieser entsprechend angezeigt.

In vorteilhafter Weiterbildung der Erfindung ist vorgesehen, dass die Defekterkennungseinheit insbesondere dann ein Defektsignal ausgibt, wenn für eine vorgebbare Zeitspanne nach dem Anlegen einer Betriebsspannung an den Gleichstrommotor die Anzahl von detektierten Stromspitzen Null ist bzw. unverändert bleibt.

Das erfindungsgemäße Konzept kann insbesondere überall dort mit Vorteil eingesetzt werden, wo bereits zu anderen Zwecken ein Ripple-Count-Verfahren verwendet wird. Dieses Ripple-Count-Verfahren, das herkömmlicherweise zur Bestimmung der Drehzahl bzw. der Anzahl von Umdrehungen des Gleichstrommotors verwendet wird, kann nun in einfacher Weise auch zur Blockiererkennung eingesetzt werden. Hardwaremäßig sind hierfür keine weiteren Komponenten erforderlich; lediglich die Software muss entsprechend angepasst werden.

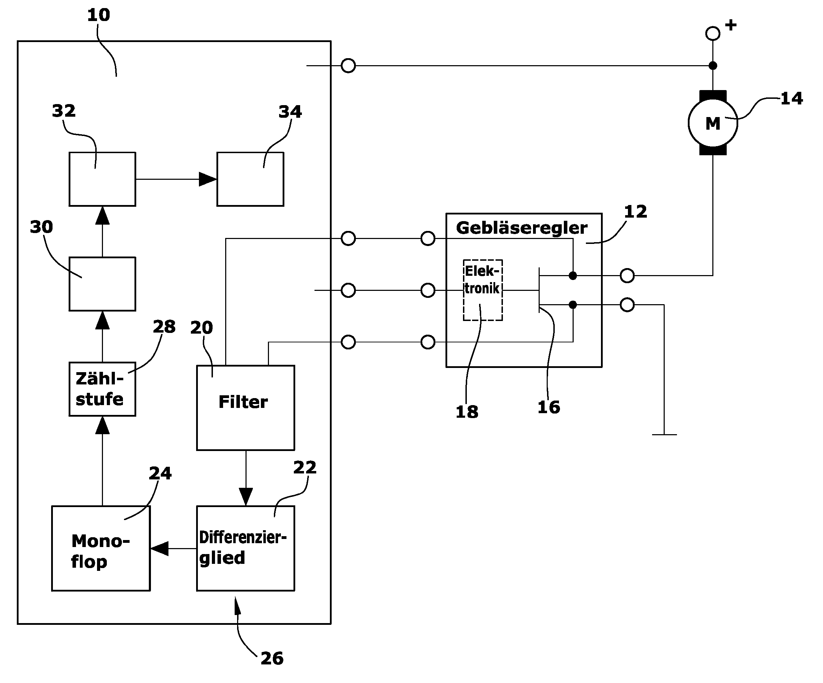

Die Erfindung wird nachfolgend unter Bezugnahme auf die Zeichnung, die ein Ausführungsbeispiel der erfindungsgemäßen Vorrichtung in ihrer Anwendung bei einem Gebläsemotor einer Kfz-Klimaanlage zeigt, näher erläutert.

In der Zeichnung ist mit 10 die Klimaelektronik dargestellt, über die ein Gebläseregler 12 angesteuert wird, der seinerseits einen kommutierenden Gleichstrommotor 14 zum Antrieb des Lüfterrades ansteuert. Der Gebläseregler 12 weist an seinem Ausgang einen Leistungstransistor 16 auf, der in den Ankerstrompfad des Gleichstrommotors 14 geschaltet ist und über eine Elektronik 18 des Gebläsereglers 12 angesteuert wird.

Erfindungsgemäß werden nun die Stromspitzen des Ankerstromsignals dadurch erfasst, dass die sich aus diesen steilen Stromveränderungen ergebenden steilen Spannungsabfallveränderungen über dem EIN-Widerstand des Leistungstransistors 16 erfasst werden. Nach einer Filterung des Spannungsabfallsignals in einem Filter 20 wird das gemessene Signal einem Differenzierglied 22 und von dort aus einem Monoflop 24 zugeführt. Damit lieg am Ausgang des Monoflops 24 für jede Stromspitze ein Impuls vor. Die Einheiten 20 bis 24 bilden also einen Ankerstromspitzendetektor 26. Die Impulse werden in einer Zählstufe 28 gezählt und die so ermittelte Anzahl von detektierten Stromspitzen pro Zeiteinheit einer Vergleichereinheit 30 zugeführt. Diese Vergleichereinheit 30 erhält auch Informationen über die aktuelle Betriebsspannung die sonstigen aktuellen Betriebsparameter des Gleichstrommotors 14. Auf Grund dieser Betriebsparameter und des Aufbaus des Kommutators (insbesondere Anzahl der Kommutatorlamellen) ist die Anzahl an zu erwartenden Stromspitzen pro Zeiteinheit bekannt. In der Vergleichereinheit 30 wird nun die messtechnisch ermittelte Anzahl von detektierten Stromspitzen pro Zeiteinheit mit der zu erwartenden Anzahl von Stromspitzen pro Zeiteinheit verglichen. Das quantitative bzw. qualitative Ergebnis dieses Vergleichs wird einer Defekterkennungseinheit 32 zugeführt. Weichen die beiden in der Vergleichereinheit 30 verglichenen Werte um mehr als ein vorgegebenes Maß voneinander ab, meldet die Defekterkennungseinheit 32 bei 34 akustisch oder optisch einen Defekt.

Die dem Leistungstransistor 16 des Gebläsereglers 12 nachgeordneten, für die Defekterkennung erforderlichen Einheiten können Bestandteil der Klimaelektronik bzw. eines Klimasteuergeräts sein.

### BEZUGSZEICHENLISTE

- 10: Klimaelektronik
- 12: Gebläseregler
- 14: Gleichstrommotor
- 16: Leistungstransistor
- 18: Elektronik des Gebläsereglers
- 20: Filter
- 22: Differenzierglied
- 24: Monoflop
- 26: Ankerstromspitzendetektor
- 28: Zählstufe
- 30: Vergleichereinheit
- 32: Defekterkennungseinheit
- 34: Defektanzeige

## Patentansprüche

1. Vorrichtung zur Defekterkennung bei einem einen Kommutator aufweisenden Gleichstrommotor, insbesondere für ein Kfz-Gebläse, mit
- einem Ankerstromspitzendetektor (26) zur Erkennung von infolge der Kommutierung hervorgerufenen Stromspitzen des Ankerstromsignals,
- einer Vergleichereinheit (30) zum Vergleichen der Anzahl von detektierten Stromspitzen pro Zeiteinheit mit der auf Grund der aktuellen Betriebsspannung und Belastungen sowie des Kommutators des Gleichstrommotors (14) zu erwartenden Anzahl von Stromspitzen pro Zeiteinheit und
- einer Defekterkennungseinheit (32), die ein Defektsignal ausgibt, wenn die Anzahl von detektierten Stromspitzen um mehr als ein vorgebbares Maß von der erwartenden Anzahl von Stromspitzen abweicht.

2. Vorrichtung nach Anspruch 1, **dadurch gekennzeichnet, dass** die Defekterkennungseinheit (32) ein Defektsignal ausgibt, wenn für eine vorgebbares Zeitspanne nach Anlegen einer Betriebsspannung an den Gleichstrommotor (14) die Anzahl von detektierten Stromspitzen Null bzw. unverändert ist.
